# EUROPEAN PATENT APPLICATION

(11) **EP 1 364 857 A2**
(43) Date of publication of application: **26.11.2003**
(21) Application number: 03011006.8
(22) Date of filing: 16.05.2003
(51) Int. Cl.: B62D 1/189, B62D 1/184

(54) **Steering column for earth-movers**

(30) Priority: 24.05.2002 IT PD20020038 U
(71) Applicant: ANTONIO CARRARO S.p.A., 35011 Campodarsego (Padova) (IT)
(72) Inventor: Martignon, Girolamo, 35010 Borgoricco(Prov.of Padova) (IT)
(74) Representative: Modiano, Guido, Dr.-Ing.

(57) **Abstract**

A steering wheel column for earth-movers, which is coupled by means of a hinge (12) to the chassis (11) of the earth-mover and can rotate in a vertical plane that is parallel to the longitudinal axis of the chassis, retention elements (13) being provided in order to lock the rotation reversibly in predefined positions.

## Description

The present invention relates to a steering wheel column for earth-movers.

Multipurpose earth-movers are already known in the form of compact tractors to which it is possible to apply tools such as lawn mowers, fork lifts, small bucket excavators, excavation tools, et cetera.

The compact tractors have a wide market owing to their high versatility and the small investment required to purchase them (a single tractor rig is purchased with multiple tools instead of buying machines that are each dedicated to a single operation).

Such compact tractors are particularly suitable for all maintenance work for public parks, sports fields, canals and ditches, roads, et cetera.

One problem that arises for these compact tractors in order to make them increasingly easy and convenient to maneuver is the adaptation of the driver's seat to most of the requirements of operators, which are mostly a function of their height and body structure characteristics.

The aim of the present invention is to provide a steering wheel column for earth-movers that allows to adjust the distance of the steering wheel from the seat in order to adapt the driver's seat to various body heights and builds.

Within this aim, an object of the present invention is to provide a steering wheel column for earth-movers that helps to form a driver's seating that is particularly comfortable for the operator, allowing the operator to have good visibility and effective action on the control means.

This aim and these and other objects that will become better apparent hereinafter are achieved by a steering wheel column for earth-movers, characterized in that it is coupled by means of a hinge to the chassis of the earth-mover and can rotate in a vertical plane that is parallel to the longitudinal axis of the chassis, retention means being provided in order to lock reversibly said rotation on predefined positions.

Further characteristics and advantages of the present invention will become better apparent from the following detailed description of an embodiment thereof, illustrated only by way of non-limitative example in the accompanying drawings, wherein:

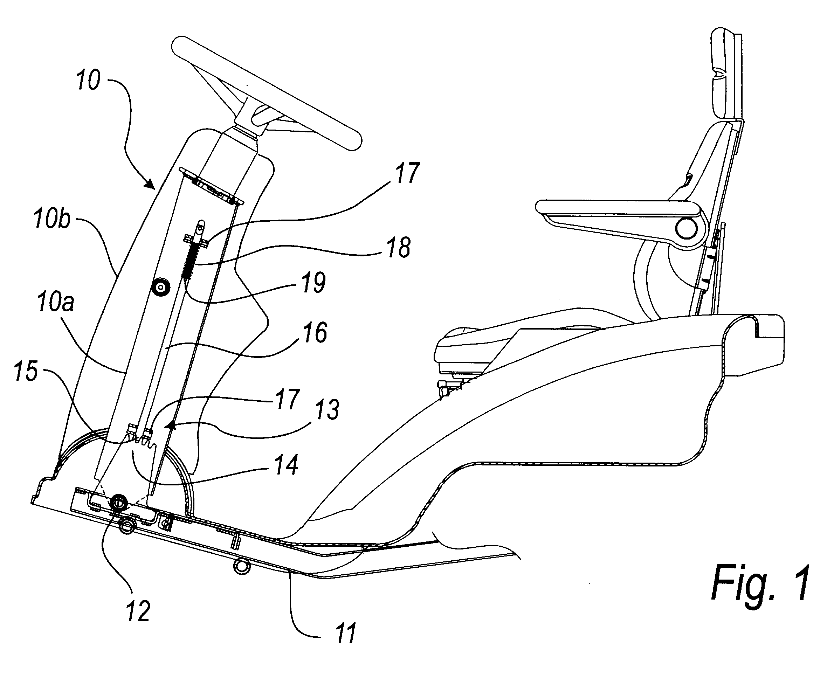

Figure 1 is a side view of the driver's seating and of the steering wheel column (shown in cross-section) of an earth-mover;

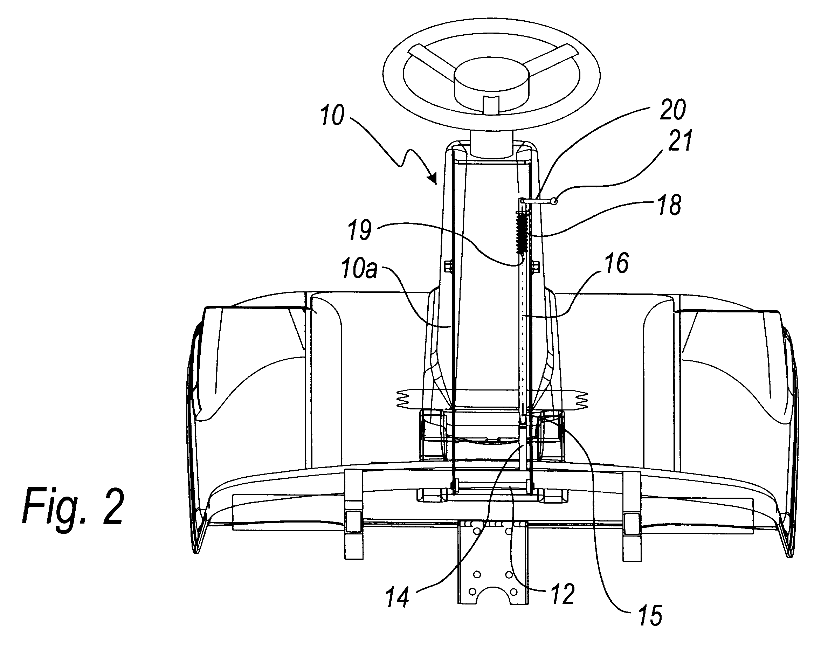

Figure 2 is a view of the steering wheel column, seen from the driver's seat;

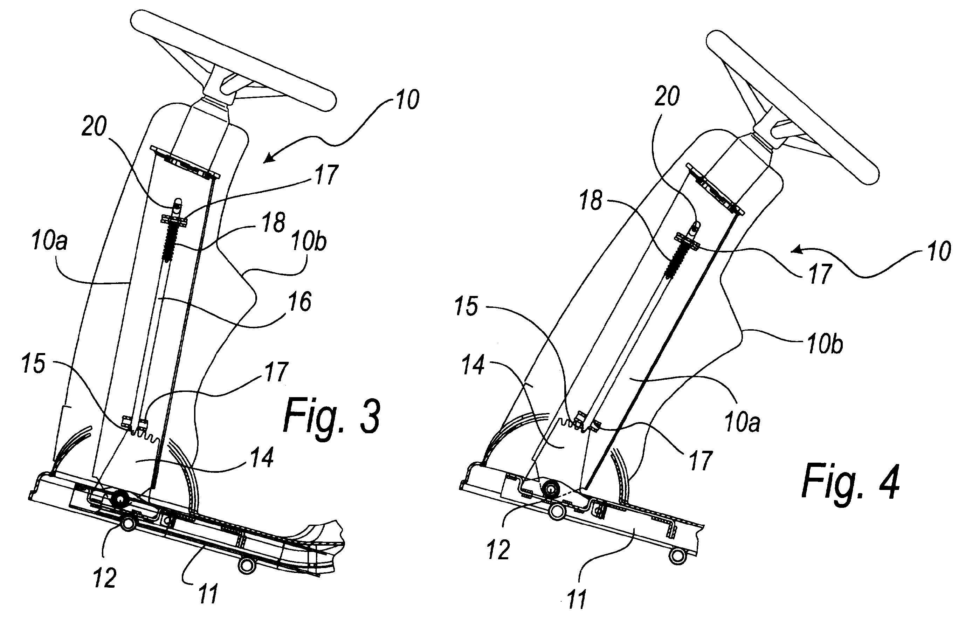

Figures 3 and 4 are sectional side views of the steering wheel column in two configurations for use.

With reference to the figures, a steering wheel column for earth-movers, in this case with hydraulic controls, is designated by the reference numeral 10 and is rigidly coupled by means of its supporting structure 10a, arranged inside the housing 10b, to the chassis 11 of the machine with a hinge 12 that allows it to rotate in a vertical plane that is parallel to the longitudinal axis of the chassis.

According to the invention, there are retention means 13 for locking reversibly the rotation of the column 10 in predefined positions.

Such retention means are constituted by a toothed sector 14, which is rigidly coupled to the chassis 11 of the earth-mover and is centered on the axis of the hinge 12, and whereon at least one tooth 15 acts. The tooth protrudes at the end of a rod 16 that is internal to the column 10 and is arranged radially with respect to the hinge 12 and the sector 14.

The teeth of the sector 14 are conveniently spaced angularly, for example by five sexagesimal degrees with respect to each other.

The rod 16 is slidingly coupled to guides 17 that are welded to the inner part of the column 10 and is pushed toward the sector 14 (so as to make the tooth 15 mesh with it) by a compression spring 18, which acts between one of the guides 17 and an abutment 19 formed thereon.

The end of the rod 16 that lies opposite the tooth 15 has a centrally pivoted lever 20 hinged thereto; the lever protrudes from the column 10 with a knob 21 that is available to the actuation of the operator.

By pushing down the knob 21, the rod 16 and therefore the tooth 15 rise in contrast with the spring 18 and it is therefore possible to rotate the column 10 in order to change the meshing position of the tooth 15 and thus vary the inclination.

The adjustment occurs, in this case, in steps of five sexagesimal degrees. Any other step may be chosen.

In practice it has been found that the present invention has achieved the intended aim and objects.

In particular, it should be noted that the steering wheel column described above allows to adjust the distance of the steering wheel from the seat in order to adapt the driver's seat to various body heights and builds, without varying the distance between the anchoring point of the column and the seat and thus leaving unchanged the space for legs and feet.

The steering wheel column therefore helps to form a driver's seating that is particularly comfortable for the operator, allowing the operator to have good visibility and an effective action on the actuation means.

Moreover, attention is called to the structural simplicity of the column according to the invention, which limits its costs and makes it competitive with respect to known ones.

The materials and the dimensions may be any according to requirements.

The disclosures in Italian Utility Model Application No. PD2002U000038 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A steering wheel column for earth-movers, **characterized in that** it is coupled by means of a hinge (12) to the chassis (11) of the earth-mover and can rotate in a vertical plane that is parallel to the longitudinal axis of the chassis, retention means (13) being provided in order to lock reversibly said rotation on predefined positions.

2. The column according to claim 1, **characterized in that** said retention means are constituted by a toothed sector (14), which is rigidly coupled to the chassis (11) of the machine and is centered on the axis of said hinge (12), whereon at least one tooth (15) acts, said tooth protruding at the end of a rod (16) that is internal to said column (10) and is arranged radially with respect to said hinge (12) and said sector (14).

3. The column according to claim 2, **characterized in that** said rod (16) is slidingly coupled to guides (17) that are rigidly coupled to the internal part of the column (10) and is pushed toward said sector (14), so as to make said at least one tooth (15) mesh with it, by a compression spring (18), which acts between one of the guides (17) and an abutment (19) formed thereon.

4. The column according to claim 3, **characterized in that** the end of said rod (16) that lies opposite said at least one tooth (15) has a lever (20) that is pivoted thereto and protrudes from the column (10) with a handle (21) that is available to the actuation of the operator.

5. The column according to claim 2, **characterized in that** the teeth of said sector (14) are angularly spaced by five sexagesimal degrees.
